# EUROPÄISCHE PATENTSCHRIFT

(11) **EP 1 008 228 B1**
(45) Veröffentlichungstag und Bekanntmachung des Hinweises auf die Patenterteilung: **16.07.2014**
(21) Anmeldenummer: 98948867.1
(22) Anmeldetag: 25.08.1998
(51) Int. Cl.: F16D 55/00, F16D 121/22, F16D 55/28, F16D 59/02, H02K 7/102

(54) **ELEKTROMAGNETISCH BETÄTIGBARE, MECHANISCHE BREMSE FÜR ELEKTROMOTOR**
ELECTROMAGNETIC OPERABLE MECHANICAL BRAKE FOR AN ELECTRIC MOTOR
FREIN MECANIQUE A COMMANDE ELECTROMAGNETIQUE POUR MOTEUR ELECTRIQUE

(30) Priorität: 25.08.1997 DE 19736942; 17.10.1997 DE 19746027
(43) Veröffentlichungstag der Anmeldung: 14.06.2000
(73) Patentinhaber: SEW-EURODRIVE GmbH & Co. KG, 76646 Bruchsal (DE)
(72) Erfinder: ROTH-STIELOW, Jörg, D-75015 Bretten (DE); SCHMIDT, Josef, D-76676 Graben-Neudorf (DE)
(86) Internationale Anmeldenummer: PCT/EP1998/005394
(87) Internationale Veröffentlichungsnummer: WO 1999/010967

(56) Entgegenhaltungen:
- WO-A-90/13168
- WO-A-95/15876
- GB-A- 2 044 867

## Beschreibung

Die Erfindung betrifft eine elektromagnetisch betätigbare, mechanische Bremse für einen Elektromotor, insbesondere für einen Getriebemotor.

Elektrische Maschinen, insbesondere Elektromotoren lassen sich sehr gut in ihrer Drehzahl steuern. Um die an sich schon gute Steuerbarkeit zu verbessern, ist es bekannt, mechanische Bremsen vorzusehen, die über eine Elektromagnet-Anordnung gelöst bzw. gelüftet werden können. Während des Betriebes des Elektromotors bestromt man eine Erregerspule der elektromagnetisch betätigten, mechanischen Bremse zusammen mit dem Elektromotor, so daß die Bremse gelüftet wird bzw. ist. Im unbestromten Zustand wird der Elektromotor aufgrund einer bremsend wirkenden Federkraft festgehalten.

Weiterhin ist es bekannt, Elektromotoren an einem Wechsel- bzw. Drehstromnetz zu betreiben. Bei Verwendung einer mit Gleichstrom zu betreibenden Erregerspule werden daher Umrichter bzw. Gleichrichter eingesetzt. Wegen der weltweit unterschiedlichen Betriebsspannungen von Wechsel- bzw. Drehstromnetzen wird eine große Typenvielfalt von Erregerspulen hergestellt und vertrieben. Für jeden Typ gibt es wiederum einen oder mehrere Typen von Gleichrichtern, die mit der Erregerspule kombinierbar sind.

Bei der Installation einer elektromagnetisch betätigbaren, mechanischen Bremse unterlaufen häufig Fehler infolge einer falschen Kombination eines Gleichrichters mit einer Erregerspule und mit anderen Bestandteilen der Bremse. Die Folge sind Fehlfunktionen und Defekte der Erregerspule und/oder des Gleichrichters. Darüber hinaus wird bei Defekten häufig nur entweder die Erregerspule oder der Gleichrichter ausgetauscht. Dabei wird teilweise übersehen, daß das jeweils andere Teil infolge des Defekts ebenfalls nicht mehr funktionstüchtig ist. Ebenso wie bei der Neuinstallation der Bremse kommt es auch vor, daß versehentlich ein anderer als der defekte Typ des Gleichrichters bzw. der Erregerspule nachinstalliert wird. Aus diesem Grund kann das nachinstallierte Teil und/oder das nicht ausgewechselte Teil unmittelbar nach der Installation funktionsuntüchtig werden.

Zusätzlich zu einem Gleichrichter können weitere Schaltungsbauteile vorgesehen sein, die dem Zuführen eines Erregerstroms zu der Erregerspule dienen. Insbesondere bei Verwendung von einer Erregerspule, die an einem Wechsel- oder Drehstromnetz betreibbar ist, kann auf einen Gleichrichter verzichtet werden. Jedoch werden auch in diesem Fall üblicherweise Schaltungsbauteile zum Zuführen, insbesondere zum Steuern, eines Erregerstroms zu der Erregerspule verwendet. Auch hierbei ist jedoch auf die richtige Kombination der Schaltungsanordnung zum Zuführen eines Erregerstroms mit der Erregerspule und mit weiteren Bauteilen der Bremse zu achten.

Aus der WO 95/15876 A ist eine Bremse für einen Elektromotor bekannt, wobei elektromagnetische Spulen innerhalb eines ringförmigen Raumes eines Spulengehäuses angeordnet sind. Jede Spule ist mit einer Schaltungsanordnung verbunden, wobei die Schaltungsanordnung ebenfalls in dem Raum (Kammer) angeordnet ist. Aufgrund der Anordnung von Spule und Schaltungsanordnung zueinander können sich die Bauteile gegenseitig ungünstig beeinflussen.

Aufgabe der Erfindung ist es, eine elektromagnetisch betätigbare, mechanische Bremse für einen Elektromotor, insbesondere für einen Getriebemotor, dahingehend weiterzubilden, daß eine möglichst leichte und hinsichtlich der Kombination von Bauteilen richtige Installation erreicht und zudem eine hohe Betriebssicherheit gegeben ist. Weiterhin soll eine Lagerhaltung von Bauteilen für die Bremse einfach und übersichtlich sein.

Die Aufgabe wird durch eine Bremse mit den Merkmalen des Patentanspruchs 1 gelöst. Weiterbildungen sind Gegenstand der abhängigen Ansprüche. Insbesondere wird die Aufgabe vorrichtungsmäßig durch eine elektromagnetisch betätigbare, mechanische Bremse für einen Elektromotor gelöst, bei welcher eine Erregerspule zur elektromagnetischen Betätigung der Bremse, insbesondere zum Lösen der Bremse, und eine Schaltungsanordnung zum Zuführen eines Erregerstromes zu der Erregerspule vorgesehen sind, wobei die Erregerspule und die Schaltungsanordnung gemeinsam in eine bautechnische Einheit integriert sind und wobei die bautechnische Einheit einen einstückigen Träger aufweist, der sowohl die Erregerspule als auch die Schaltungsanordnung trägt. Erfindungsgemäß ist hier ein thermischer Übergangswiderstand zwischen der Schaltungsanordnung und der Erregerspule sowohl wesentlich größer als ein thermischer Übergangswiderstand zwischen der Schaltungsanordnung und dem Träger als auch wesentlich größer als ein thermischer Übergangswiderstand zwischen der Erregerspule und dem Träger.

Vorzugsweise ist zwischen der Erregerspule und der Schaltungsanordnung eine Wärmesperre angeordnet.

Vorzugsweise sind in die bautechnische Einheit weitere Bauteile der Bremse, wie z. B. Druckfedern zum Erzeugen einer Bremskraft integriert. Durch die Integration in eine bautechnische Einheit sind Fehlkombinationen nahezu ausgeschlossen. Beispielsweise kann die äußere Form der bautechnischen Einheit so gestaltet werden, daß nur eine Kombination mit geeigneten weiteren Bauteilen der Bremse möglich ist. Als weitere Bauteile kommen hier insbesondere mit Reibflachen versehene Scheiben einer Scheibenbremse in Frage, die durch die Erregerspule betätigbar sind. Die Lagerhaltung kann aufgrund der Erfindung wesentlich vereinfacht werden, da nunmehr anstelle von mindestens zwei Bauteilen, nämlich der Erregerspule und der Schaltungsanordnung, nur noch eine bautechnische Einheit auf Lager gehalten werden muß.

Dadurch müssen keine aufwendigen Listen mehr geführt werden, aus denen die richtige Kombination der Bauteile entnommen werden kann. Weiterhin sind sowohl die Neuinstallation als auch die Nachinstallation der Bauteile vereinfacht. Aus diesem Grund kann die Arbeitszeit eines Monteurs erheblich verkürzt werden. Die Bauteile können bereits vorher beispielsweise automatisch und serienmäßig zusammengesetzt werden.

Erfindungsgemäß (vgl. Patentanspruch 1) oder vorzugsweise (vgl. Patentanspruch 2) weist die bautechnische Einheit einen einstückigen Träger auf, der sowohl die Erregerspule als auch die Schaltungsanordnung trägt. Bevorzugtermaßen ist der Träger so ausgebildet, daß die Bauteile nach der Fertigstellung der bautechnischen Einheit nicht mehr oder nur noch mit großem Aufwand oder mit Hilfe von Spezialwerkzeug von dem Träger lösbar sind. Durch einen einstückigen Träger können die Konstruktion und auch die Herstellung der bautechnischen Einheit vereinfacht werden. Durch die Unlösbarkeit der Bauteile von dem Träger bzw. bei erschwerter Lösbarkeit ist eine Fehlkombination von Bauteilen nahezu ausgeschlossen.

Bei einer Weiterbildung umfasst der Träger ein Gehäuse, das vorzugsweise aus Metall, insbesondere aus Grauguß oder Aluminium-Druckguß, besteht. Diese Materialien gewährleisten eine gute thermische Leitfähigkeit, so daß lokale Überhitzungen vermieden werden können. Dies ist insbesondere dann von Vorteil, wenn bei länger anhaltendem Betrieb eines Elektromotors die Erregerspule Wärmeverluste produziert. Ein einstückiges Gehäuse ist aber in jedem Fall so auslegbar, daß eine gleichmäßige Temperaturverteilung und ein guter Wärmeübergang an umgebende Bauteile oder die Umgebungsluft gewährleistet ist.

Bei einer Weiterbildung ist der Träger aus Kunststoff gefertigt. Durch einen Kunststoffträger lassen sich Gewicht und Materialkosten einsparen.

Zur Vermeidung einer Überhitzung der Schaltungsanordnung, die insbesondere temperaturempfindliche Halbleiterbauteile aufweist, ist die bautechnische Einheit erfindungsgemäß (vgl. Patentanspruch 1) oder vorzugsweise (vgl. Patentanspruch 2) derart ausgebildet, daß der thermische Übergangswiderstand zwischen der Schaltungsanordnung und der Erregerspule sowohl wesentlich größer als der thermische Übergangswiderstand zwischen der Schaltungsanordnung und dem Träger als auch wesentlich größer als der thermische Übergangswiderstand zwischen der Erregerspule und dem Träger ist. Auf diese Weise können sowohl die Erregerspule als auch die Schaltungsanordnung Wärme an den Träger abgeben. Bei einer Weiterbildung kann die Schaltungsanordnung zusätzlich auf andere Weise Wärme an die Umgebung oder andere Bauteile der Bremse abgeben, d.h., es sind weitere möglichst klein dimensionierte thermische Übergangswiderstände zur Schaltungsanordnung vorhanden. Insbesondere wird auch die Bewegung des Elektromotors zum Antrieb einer Zwangskonvektion genutzt, durch die die Schaltungsanordnung und/oder die Erregerspule gekühlt werden.

Insbesondere zur Vereinfachung der Herstellung einer erfindungsgemäßen elektromagnetisch betätigbaren, mechanischen Bremse sind die Erregerspule und die Schaltungsanordnung mit Kunststoff zu einem Block vergossen und/oder mit Kunststoff umspritzt.

Bei einer Weiterbildung der erfingungsgemäßen Bremse weist diese eine elektrische Verbindung zum Anschluß der Schaltungsanordnung an eine Stromquelle, insbesondere an ein Wechselstromnetz auf, die derart ausgebildet ist, daß ein niedriger thermischer Übergangswiderstand zwischen der Schaltungsanordnung und einer Stromanschlußleitung herstellbar ist. Die Stromanschlußleitung ist bei einer Variante dieser Ausgestaltung fest mit der Schaltungsanordnung verbunden. Insbesondere weist die Verbindung eine Wärmekontaktfläche zur Herstellung des niedrigen thermischen Übergangswiderstandes auf, die größer als eine Querschnittsfläche der Schaltungsanordnung ist, wobei die Schaltungsanordnung in geringem Abstand entlang der Wärmekontaktfläche angeordnet ist. Die Stromanschlußleitung kann so einen wesentlichen Anteil einer Wärmeabfuhr von der Schaltungsanordnung übernehmen.

Bei noch einer Weiterbildung ist der thermische Übergangswiderstand zwischen der Schaltungsanordnung und der Erregerspule wesentlich größer als der thermische Übergangswiderstand zwischen der Erregerspule und der Umgebung der bautechnischen Einheit. So kann, normale Betriebsbedingungen vorausgesetzt, eine Überhitzung der Schaltungsanordnung vermieden werden.

Vorzugsweise ist die Schaltungsanordnung mit einer Kühlplatte, bevorzugtermaßen aus Aluminium, zur Ableitung von Wärme verbunden. Insbesondere erstreckt sich die Schaltungsanordnung im wesentlichen zweidimensional entlang der Kühlplatte. Bei dieser Ausführungsform gewährleistet die Kühlplatte auch die Verteilung bzw. den Abtransport von Wärme, die von Leistungsbauteilen der Schaltungsanordnung abzuführen ist.

Günstigerweise (vgl. Patentanspruch 1) oder eben erfindungsgemäß (vgl. Patentanspruch 2) ist zwischen der Erregerspule und der Schaltungsanordnung eine Wärmesperre angeordnet.

Bei einer Ausführungsform besteht die Wärmesperre aus einem Material mit niedriger Wärmeleitfähigkeit, insbesondere aus keramischem Material. Bei einer weiteren Ausführungsform ist die Materialverbindung zwischen der Erregerspule und der Schaltungsanordnung derart ausgebildet, daß aufgrund ihrer Abmessungen eine Wärmesperre bewirkt ist. Insbesondere ist die Materialverbindung brückenartig ausgebildet. Bei geeigneter Ausbildung der Materialbrücke kann ein hoher thermischer Übergangswiderstand zwischen der Erregerspule und der Schaltungsanordnung allein durch diese gewährleistet werden. Bei vielen Anwendungen der erfindungsgemäßen Bremse kann dann auf weitere Maßnahmen der thermischen Entkopplung verzichtet werden.

Nachfolgend werden zur Erläuterung der Erfindung Ausführungsbeispiele anhand von Abbildungen beschrieben. Die Erfindung ist jedoch nicht auf diese Ausführungsbeispiele beschränkt. Hierbei zeigen:
- Fig. 1: ein erstes Ausführungsbeispiel der erfindungsgemäßen Bremse und
- Fig. 2: ein zweites Ausführungsbeispiel.

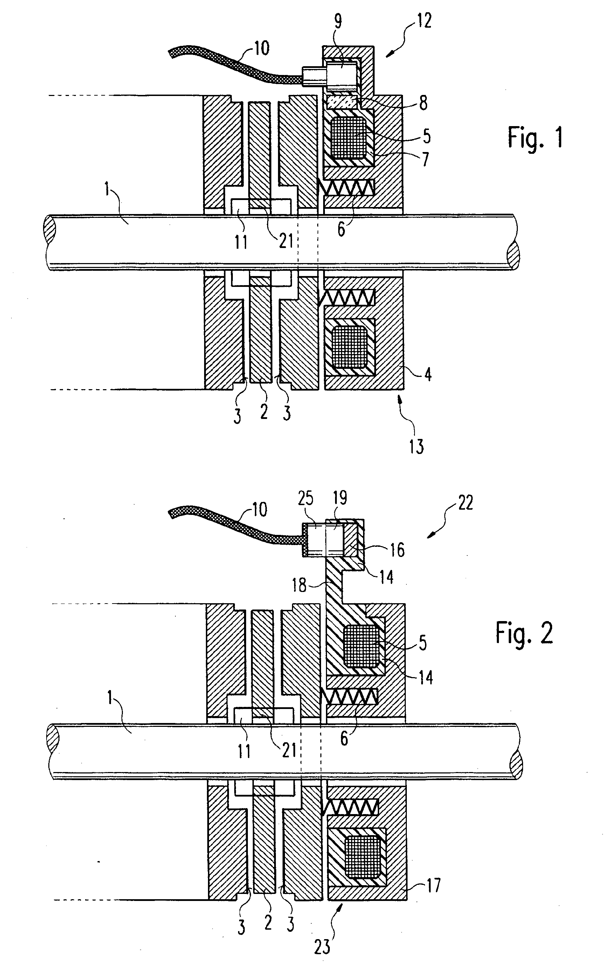

Im linken Figurenteil der Fig. 1 befindet sich die Wicklung eines Elektromotors, der eine Motorwelle 1 aufweist, die sich rotierend in dem Motorgehäuse bewegen kann. Über axiale Verzahnungen 11, 21 ist eine Belagträgerscheibe 2 verdrehfest mit der Motorwelle 1 verbunden. Alle weiteren in Fig. 1 dargestellten Teile ruhen beim Betrieb des Elektromotors. In der gezeigten Darstellung rechts und links von der Belagträgerscheibe 2 sind Reibflächen 3 angeordnet, die zum Abbremsen des Motors von Druckfedern 6 gegen die Belagträgerscheibe 2 gedrückt werden.

Weiterhin soll durch das Andrücken der Reibflächen 3 ein unbeabsichtigtes Rotieren der Motorwelle 1 verhindert werden. Beim Betrieb des Motors dagegen fließt durch die Erregerspule 5 ein Erregerstrom, der die Bremse 12 lüftet, d. h., die Reibflächen 3 von der Belagträgerscheibe 2 entfernt. Bei der gezeigten Ausführungsform handelt es sich um eine Scheibenbremse mit einer Gleichstrom-Erregerspule, die jedoch an einem Wechselstromnetz oder an einer Phase eines Drehstromnetzes betrieben wird. Aus diesem Grund ist ein Bremsgleichrichter 9 vorgesehen, der die Wechselspannung gleichrichtet. Der Bremsgleichrichter 9 ist über eine Anschlußleitung 10 mit dem Drehstrom- oder Wechselstromnetz verbunden.

Erfindungsgemäß sind die Erregerspule 5 und der Bremsgleichrichter 9 gemeinsam in eine bautechnische Einheit 13 integriert. Die bautechnische Einheit 13 weist ein Gehäuse 4 aus Aluminium-Druckguß auf, das sowohl die Erregerspule 5 als auch den Bremsgleichrichter 9 trägt.

Zur Einbettung in das Gehäuse 4 sind die Erregerspule 5 und der Bremsgleichrichter 9 mit einer Kunststoffmasse 7 ummantelt, die in der Fig. 1 übertrieben dick dargestellt ist. In Wirklichkeit beträgt die Schichtdicke der Kunststoffmasse 7 zwischen der Erregerspule 5 und dem Gehäuse 4 als auch die Schichtdicke zwischen dem Bremsgleichrichter 9 und dem Träger 4 wenige Zehntel Millimeter. Aus diesem Grund sind sowohl der thermische Übergangswiderstand R₅₄ zwischen der Erregerspule 5 und dem Träger 4 als auch der thermische Übergangswiderstand R₉₄ zwischen dem Bremsgleichrichter 9 und dem Träger 4 klein.

Zwischen dem Bremsgleichrichter 9 und der Erregerspule 5 ist eine Wärmesperre 8 aus schlecht wärmeleitendem Material, insbesondere aus keramischem Material angeordnet. Der thermische Übergangswiderstand R₉₅ zwischen dem Bremsgleichrichter 9 und der Erregerspule 5 ist daher wesentlich größer als die thermischen Übergangswiderstände R₅₄, R₉₅.

Beim Betrieb der Bremse 12, d. h., wenn ein Erregerstrom durch die Erregerspule 5 fließt, entsteht unter anderem durch ohmsche Verluste Wärme. Die Wärmeproduktion des Bremsgleichrichters 9 ist dagegen vergleichsweise gering. Aus diesem Grund erreicht die Erregerspule 5 eine gegenüber ihrer Umgebung deutlich höhere Temperatur. Da Bauteile des Bremsgleichrichters 9 temperaturempfindlich sind, wird durch die bereits beschriebenen und weitere konstruktive Maßnahmen verhindert, daß der Bremsgleichrichter 9 eine für seine Bauteile gefährlich hohe Temperatur erreicht. Aufgrund der Maßnahmen wird zum einen die in der Erregerspule 5 erzeugte Wärme im wesentlichen vollständig an die Umgebung der Bremse 12 abgeführt und zum anderen der geringe Teil der von der Erregerspule 5 erzeugten Wärme, der auf den Bremsgleichrichter 9 übertragen wird, an die Umgebung abgeführt. Weiterhin wird Wärme, die in dem Bremsgleichrichter 9 erzeugt wird, ebenfalls an die Umgebung abgeführt. Im gezeigten Ausführungsbeispiel gelingt dies abgesehen von der bereits beschriebenen Gestaltung der thermischen Übergangswiderstände R₅₄, R₉₄, R₉₅ aufgrund der Anordnung der bautechnischen Einheit 13 im Kühlluftstrom des Elektromotors. Abgesehen davon trägt auch die Anschlußleitung 10 zum Wärmeabtransport von dem Bremsgleichrichter 9 bei.

Die in Fig. 2 gezeigte Ausführungsform unterscheidet sich von der in Fig. 1 gezeigten im Aufbau der bautechnischen Einheit 23. Anstelle eines einfachen Bremsgleichrichters weist die Bremse 22 eine um Steuerelemente erweiterte Schaltungsanordnung auf. Diese Steuerschaltung 19 enthält besonders temperaturempfindliche Bauteile. Aus diesem Grund sind gegenüber der Ausführungsform von Fig. 1 weitergehende Maßnahmen zum Schutz vor Überhitzung getroffen. So weist die bautechnische Einheit 23 unmittelbar an der Steuerschaltung 19 eine Kühlplatte 16, vorzugsweise aus Aluminium, auf. Die Kühlplatte 16 garantiert eine gleichmäßige Temperaturverteilung über die Erstreckung der Steuerschaltung 19 und einen guten Wärmeabtransport von der Steuerschaltung 19.

Da der Wärmeübergang von festen Materialien auf umgebende Luft im allgemeinen schlecht ist, ist auf der anderen Seite der Steuerschaltung 19 ein Steckverbinder 25 vorgesehen, der so ausgebildet ist, daß über ihn Wärme gut auf die Anschlußleitung 10 übertragbar ist. Hierzu weist der Steckverbinder 25 eine große Wärmekontaktfläche auf, die größer als die Querschnittsfläche der entlang dem Steckverbinder 25 angeordneten Steuerschaltung 19 ist.

Ebenfalls im Unterschied zu der zuvor beschriebenen Ausführungsform weist die bautechnische Einheit 23 einen Kunststoffträger 14 auf, der die Erregerspule 5 und die Steuerschaltung 19 trägt. Der Kunststoffträger 14 wird vorzugsweise im Gußverfahren hergestellt. Dabei werden zunächst die Erregerspule 5, die Kühlplatte 16 und der Steckverbinder 25 miteinander verbunden. Wegen der Temperaturempfindlichkeit ihrer Bauteile wird die Steuerschaltung 19 erst nachträglich eingebracht.

Zur thermischen Isolierung der Steuerschaltung 19 von der Erregerspule 5 weist der Kunststoffträger 14 eine Kunststoffbrücke 18 auf, die eine geringe Materialstärke hat. Im Bereich der Erregerspule 5 ist eine Ummantelung 17 vorgesehen, die beispielsweise ebenfalls aus Kunststoff oder aus Metall besteht. Zum Auswechseln der Erregerspule 5 und/oder der Steuerschaltung 19 ist entweder die gesamte bautechnische Einheit 23 inklusive Ummantelung 17 oder nur der Kunststoffträger 14 zusammen mit den von ihm getragenen Bauteilen zu ersetzen. In letzterem Fall wird durch unterschiedliche Gestaltung der Außenkonturen der Ummantelung bei unterschiedlichen Typen von Bremsen garantiert, daß nur ein passend formnegativ gestalteter Kunststoffträger mit den richtigen Typen einer Erregerspule und einer Steuerschaltung ersetzt wird.

Bei weiteren, nicht gezeigten Ausführungsformen der Erfindung können Merkmale der beiden Ausführungsbeispiele miteinander kombiniert werden. Beispielsweise kann ein Bremsgleichrichter gemäß Fig. 1 anstelle einer Steuerschaltung gemäß Fig. 2 vorgesehen werden.

Aufgrund der Erfindung wird die Anzahl von Bauteilen verringert, die weltweit für die Installation elektromagnetisch betätigbarer, mechanischer Bremsen gelagert und vertrieben werden. Außerdem wird durch die Integration der Erregerspule und der Schaltungsanordnung zum Zuführen des Erregerstroms in eine bautechnische Einheit eine falsche Kombination von Bauteilen vermieden. Dadurch sind eine schnelle und betriebssichere Installation und Reparatur sichergestellt.

### Bezugszeichenliste

- 1: Motorwelle
- 2: Belagträgerscheibe
- 3: Reibfläche
- 4: Gehäuse
- 5: Erregerspule
- 6: Druckfeder
- 7: Kunststoffmasse
- 8: Wärmesperre
- 9: Bremsgleichrichter
- 10: Anschlußleitung
- 11: axiale Verzahnung
- 12: Bremse
- 13: bautechnische Einheit
- 14: Kunststoffträger
- 16: Kühlplatte
- 17: Ummantelung
- 18: Kunststoffbrücke
- 19: Steuerschaltung
- 21: axiale Verzahnung
- 22: Bremse
- 23: bautechnische Einheit
- 25: Steckverbinder
- R₅₄: thermischer Übergangswiderstand Erregerspule-Träger
- R_{5U}: thermischer Übergangswiderstand Erregerspule-Umgebung
- R₉₄: thermischer Übergangswiderstand Schaltungsanordnung-Träger
- R₉₅: thermischer Übergangswiderstand Schaltungsanordnung-Erregerspule
- R₉₁₀: thermischer Übergangswiderstand Schaltungsanordnung-Anschlußleitung

## Patentansprüche

1. Elektromagnetisch betätigbare, mechanische Bremse (12; 22) für einen Elektromotor, insbesondere für einen Getriebemotor, mit einer Erregerspule (5) zur elektromagnetischen Betätigung der Bremse (12, 22), insbesondere zum Lösen der Bremse (12, 22), und mit einer Schaltungsanordnung (9; 19) zum Zuführen eines Erregerstroms zu der Erregerspule (5),
wobei die Erregerspule (5) und die Schaltungsanordnung (9; 19) gemeinsam in eine bautechnische Einheit (13; 23) integriert sind,
und wobei die bautechnische Einheit (13; 23) einen einstückigen Träger (4; 14) aufweist, der sowohl die Erregerspule (5) als auch die Schaltungsanordnung (9; 19) trägt, **dadurch gekennzeichnet,daß**
ein thermischer Übergangswiderstand (R₉₅) zwischen der Schaltungsanordnung (9; 19) und der Erregerspule (5)
sowohl wesentlich größer als ein thermischer Übergangswiderstand (R₉₄) zwischen der Schaltungsanordnung (9; 19) und dem Träger (4; 14)
als auch wesentlich größer als ein thermischer Übergangswiderstand (R₅₄) zwischen der Erregerspule (5) und dem Träger (4; 14) ist.

2. Bremse nach Anspruch 1,
**dadurch gekennzeichnet, daß**
zwischen der Erregerspule (5) und der Schaltungsanordnung (9; 19) eine Wärmesperre (8; 18) angeordnet ist.

3. Bremse nach Anspruch 2,
**dadurch gekennzeichnet, daß**
die bautechnische Einheit (13; 23) einen einstückigen Träger (4; 14) aufweist, der sowohl die Erregerspule (5) als auch die Schaltungsanordnung (9; 19) trägt.

4. Bremse nach Anspruch 1 oder 3,
**dadurch gekennzeichnet, daß**
der Träger (4) ein Gehäuse, vorzugsweise aus Metall, insbesondere aus Grauguß oder Aluminium-Druckguß, der bautechnischen Einheit (13) umfaßt.

5. Bremse nach Anspruch 1 oder 3,
**dadurch gekennzeichnet, daß**
der Träger (14) aus Kunststoff gefertigt ist.

6. Bremse nach einem der Ansprüche 3 bis 5,
**dadurch gekennzeichnet, daß**
der thermische Übergangswiderstand (R₉₅) zwischen der Schaltungsanordnung (9; 19) und der Erregerspule (5) sowohl wesentlich größer als der thermische Übergangswiderstand (R₉₄) zwischen der Schaltungsanordnung (9; 19) und dem Träger (4; 14) als auch wesentlich größer als der thermische Übergangswiderstand (R₅₄) zwischen der Erregerspule (5) und dem Träger (4; 14) ist.

7. Bremse nach einem der vorhergehenden Ansprüche,
**dadurch gekennzeichnet, daß**
die Erregerspule (5) und die Schaltungsanordnung (9; 19) mit Kunststoff (7; 14) zu einem Block vergossen und/oder mit Kunststoff umspritzt sind.

8. Bremse nach einem der vorhergehenden Ansprüche, mit einer elektrischen Verbindung (25) zum Anschluß der Schaltungsanordnung an eine Stromquelle,
insbesondere an ein Wechselstromnetz,
**dadurch gekennzeichnet, daß**
die Verbindung (25) derart ausgebildet ist, daß ein niedriger thermischer Übergangswiderstand (R₉₁₀) zwischen der Schaltungsanordnung (9; 19) und einer Stromanschlußleitung (10) herstellbar ist.

9. Bremse nach Anspruch 8,
**dadurch gekennzeichnet, daß**
die Verbindung (25) eine Wärmekontaktfläche zur Herstellung des niedrigen thermischen Übergangswiderstands (R₉₁₀) aufweist, die größer als eine Querschnittsfläche der Schaltungsanordnung ist, wobei die Schaltungsanordnung in geringem Abstand entlang der Wärmekontaktfläche angeordnet ist.

10. Bremse nach einem der vorhergehenden Ansprüche,
**dadurch gekennzeichnet, daß**
der thermische Übergangswiderstand (R₉₅) zwischen der Schaltungsanordnung (9; 19) und der Erregerspule (5) wesentlich größer als ein thermischer Übergangswiderstand (R_{5U}) zwischen der Erregerspule (5) und der Umgebung der bautechnischen Einheit (13; 23) ist.

11. Bremse nach einem der vorhergehenden Ansprüche,
**dadurch gekennzeichnet, daß**
die Schaltungsanordnung (19) mit einer Kühlplatte (16), vorzugsweise aus Aluminium, zur Ableitung von Wärme verbunden ist.

12. Bremse nach einem der Ansprüche 1 oder 3 bis 11,
**dadurch gekennzeichnet, daß**
zwischen der Erregerspule (5) und der Schaltungsanordnung (9; 19) eine Wärmesperre (8; 18) angeordnet ist.

13. Bremse nach einem der Ansprüche 2 bis 12,
**dadurch gekennzeichnet, daß**
die Wärmesperre (8) aus einem Material mit niedriger Wärmeleitfähigkeit, insbesondere aus keramischem Material, besteht.

14. Bremse nach einem der Ansprüche 2 bis 13,
**dadurch gekennzeichnet, daß**
die Materialverbindung (18) zwischen der Erregerspule (5) und der Schaltungsanordnung (19) derart ausgebildet ist, daß aufgrund ihrer Abmessungen eine Wärmesperre bewirkt ist, insbesondere, daß die Materialverbindung (18) brückenartig ist.

## Claims

1. An electromagnetically actuated, mechanical brake (12; 22) for an electric motor, in particular for a gear motor, with a field coil (5) for electromagnetically actuating the brake (12, 22), in particular for releasing the brake (12, 22), and with a circuit arrangement (9; 19) for supplying a field current to the field coil (5),
wherein the field coil (5) and the circuit arrangement (9; 19) are jointly integrated in a structural unit (13; 23),
and wherein the structural unit (13; 23) has a one-piece support (4; 14) which bears both the field coil (5) and the circuit arrangement (9; 19),
**characterised in that**
a thermal transfer resistance (R₉₅) between the circuit arrangement (9; 19) and the field coil (5)
is both substantially greater than a thermal transfer resistance (R₉₄) between the circuit arrangement (9; 19) and the support (4; 14)
and substantially greater than a thermal transfer resistance (R₅₄) between the field coil (5) and the support (4; 14).

2. A brake according to Claim 1,
**characterised in that**
a thermal barrier (8; 18) is arranged between the field coil (5) and the circuit arrangement (9; 19).

3. A brake according to Claim 2,
**characterised in that**
the structural unit (13; 23) has a one-piece support (4; 14) which bears both the field coil (5) and the circuit arrangement (9; 19).

4. A brake according to Claim 1 or 3,
**characterised in that**
the support (4) comprises a housing, preferably made of metal, in particular of grey cast iron or diecast aluminium, of the structural unit (13).

5. A brake according to Claim 1 or 3,
**characterised in that** the support (14) is manufactured from plastics material.

6. A brake according to one of Claims 3 to 5,
**characterised in that**
the thermal transfer resistance (R₉₅) between the circuit arrangement (9; 19) and the field coil (5) is both substantially greater than the thermal transfer resistance (R₉₄) between the circuit arrangement (9; 19) and the support (4; 14) and substantially greater than the thermal transfer resistance (R₅₄) between the field coil (5) and the support (4; 14).

7. A brake according to one of the preceding claims,
**characterised in that**
the field coil (5) and the circuit arrangement (9; 19) are cast to form a block with plastics material (7; 14) and/or are encapsulated with plastics material.

8. A brake according to one of the preceding claims, with an electrical connection (25) for connecting the circuit arrangement to a power source, in particular to an AC system,
**characterised in that**
the connection (25) is designed such that a low thermal transfer resistance (R₉₁₀) can be produced between the circuit arrangement (9; 19) and a current connection line (10).

9. A brake according to Claim 8,
**characterised in that**
the connection (25) has a heat contact surface for producing the low thermal transfer resistance (R₉₁₀) which is greater than a cross-sectional surface of the circuit arrangement, the circuit arrangement being arranged at a short distance along the heat contact surface.

10. A brake according to one of the preceding claims,
**characterised in that**
the thermal transfer resistance (R₉₅) between the circuit arrangement (9; 19) and the field coil (5) is substantially greater than a thermal transfer resistance (R_{5U}) between the field coil (5) and the surroundings of the structural unit (13; 23).

11. A brake according to one of the preceding claims,
**characterised in that**
the circuit arrangement (19) is connected to a cooling plate (16), preferably made of aluminium, for dissipating heat.

12. A brake according to one of Claims 1 or 3 to 11,
**characterised in that**
a thermal barrier (8; 18) is arranged between the field coil (5) and the circuit arrangement (9; 19).

13. A brake according to one of Claims 2 to 12,
**characterised in that**
the thermal barrier (8) consists of a material with low thermal conductivity, in particular of ceramic material.

14. A brake according to one of Claims 2 to 13,
**characterised in that**
the material connection (18) between the field coil (5) and the circuit arrangement (19) is designed such that due to its dimensions a thermal barrier is produced, in particular that the material connection (18) is bridge-like.

## Revendications

1. Frein mécanique (12 ; 22) à commande électromagnétique pour un moteur électrique, en particulier pour un motoréducteur, comprenant une bobine excitatrice (5) pour la commande électromagnétique du frein (12, 22), en particulier pour le desserrage du frein (12, 22), et un circuit (9 ; 19) pour l'amenée d'un courant d'excitation à la bobine excitatrice (5),
la bobine excitatrice (5) et le circuit (9 ; 19) étant intégrés en commun dans une unité fonctionnelle (13 ; 23),
et l'unité fonctionnelle (13 ; 23) présentant un support (4 ; 14) en une seule pièce qui porte aussi bien la bobine excitatrice (5) que le circuit (9 ; 19),
**caractérisé en ce**
**qu'**une résistance de contact thermique (R₉₅) entre le circuit (9 ; 19) et la bobine excitatrice (5) est
à la fois beaucoup plus grande qu'une résistance de contact thermique (R₉₄) entre le circuit (9 ; 19) et le support (4 ; 14)
et beaucoup plus grande qu'une résistance de contact thermique (R₅₄) entre la bobine excitatrice (5) et le support (4 ; 14).

2. Frein selon la revendication 1,
**caractérisé en ce**
**qu'**une barrière thermique (8 ; 18) est disposée entre la bobine excitatrice (5) et le circuit (9 ; 19).

3. Frein selon la revendication 2,
**caractérisé en ce**
**que** l'unité fonctionnelle (13 ; 23) présente un support (4 ; 14) en une seule pièce qui porte aussi bien la bobine excitatrice (5) que le circuit (9 ; 19).

4. Frein selon la revendication 1 ou 3,
**caractérisé en ce**
**que** le support (4) comprend un boîtier, de préférence en métal, en particulier en fonte grise ou en aluminium moulé sous pression, de l'unité fonctionnelle (13).

5. Frein selon la revendication 1 ou 3,
**caractérisé en ce**
**que** le support (14) est réalisé en matière plastique.

6. Frein selon l'une des revendications 3 à 5,
**caractérisé en ce**
**que** la résistance de contact thermique (R₉₅) entre le circuit (9 ; 19) et la bobine excitatrice (5) est à la fois beaucoup plus grande que la résistance de contact thermique (R₉₄) entre le circuit (9 ; 19) et le support (4 ; 14) et beaucoup plus grande que la résistance de contact thermique (R₅₄) entre la bobine excitatrice (5) et le support (4 ; 14).

7. Frein selon l'une des revendications précédentes,
**caractérisé en ce**
**que** la bobine excitatrice (5) et le circuit (9 ; 19) sont scellés en un bloc avec une matière plastique (7 ; 14) et/ou enrobés d'une matière plastique.

8. Frein selon l'une des revendications précédentes, comprenant une liaison électrique (25) pour la connexion du circuit à une source de courant, en particulier à un réseau à courant alternatif,
**caractérisé en ce**
**que** la liaison (25) est conçue de façon à permettre de réaliser une faible résistance de contact thermique (R₉₁₀) entre le circuit (9 ; 19) et une ligne de connexion électrique (10).

9. Frein selon la revendication 8,
**caractérisé en ce**
**que** la liaison (25) présente une surface de contact thermique pour réaliser la faible résistance de contact thermique (R₉₁₀), qui est plus grande qu'une surface de section transversale du circuit, le circuit étant disposé à faible distance le long de la surface de contact thermique.

10. Frein selon l'une des revendications précédentes,
**caractérisé en ce**
**que** la résistance de contact thermique (R₉₅) entre le circuit (9 ; 19) et la bobine excitatrice (5) est beaucoup plus grande qu'une résistance de contact thermique (R_{5U}) entre la bobine excitatrice (5) et l'environnement de l'unité fonctionnelle (13 ; 23).

11. Frein selon l'une des revendications précédentes,
**caractérisé en ce**
**que** le circuit (19) est relié à une plaque de refroidissement (16), de préférence en aluminium, pour l'évacuation de la chaleur.

12. Frein selon l'une des revendications 1 ou 3 à 11,
**caractérisé en ce**
**qu'**une barrière thermique (8 ; 18) est disposée entre la bobine excitatrice (5) et le circuit (9 ; 19).

13. Frein selon l'une des revendications 2 à 12,
**caractérisé en ce**
**que** la barrière thermique (8) est composée d'un matériau à faible conductibilité thermique, en particulier d'un matériau céramique.

14. Frein selon l'une des revendications 2 à 13,
**caractérisé en ce**
**que** la liaison matérielle (18) entre la bobine excitatrice (5) et le circuit (19) est conçue, de par ses dimensions, de façon à produire une barrière thermique, en particulier que la liaison matérielle (18) est réalisée en forme de pont.
